# EUROPEAN PATENT APPLICATION

(11) **EP 1 314 827 A1**
(43) Date of publication of application: **28.05.2003**
(21) Application number: 02079844.3
(22) Date of filing: 20.11.2002
(51) Int. Cl.: E03F 1/00

(54) **Separating gully**

(30) Priority: 22.11.2001 NL 1019414
(71) Applicant: WAVIN B.V., 8011 CW Zwolle (NL)
(72) Inventor: Ranter, Jan Hendrik, 7694 ZA Kloosterhaar (NL)
(74) Representative: Iemenschot, Johannes Andreas, Ir.

(57) **Abstract**

A gully for receiving and separately discharging dirty waste water and relatively clean rainwater comprises a gully body (2) with a bottom (3) and a side wall (4). The gully body is provided with an inlet (5) made at a certain height in the side wall, a first outlet (6) made in the side wall at a lower level than the inlet, and a second outlet (7) made in the side wall at substantially the same height as the inlet. The inlet (5) and the second outlet (7) are connected to each other in the interior of the gully by means of a connecting pipe part (8) that is provided with a lateral branch (9) facing the bottom (3) of the gully. A ball (10) is situated in the interior of the gully, which ball can float on water and has a diameter that is greater than the diameter of the lateral branch, and which ball can close off the lateral branch when the water level rises in the gully.

## Description

The invention relates to a gully for receiving and separately discharging dirty waste water and relatively clean rainwater, comprising a gully body with a bottom and a side wall, which gully body is provided with an inlet made at a certain height in the side wall, a first outlet made in the side wall at a lower level than the inlet, and a second outlet made in the side wall at substantially the same height as the inlet.

Such a gully is known from NL-A-1004453. In the case of the known separating gully, the first outlet is provided with a self-adjusting flow limiter, which, when supplied with relatively small quantities of water and when there are low rates of flow in the first outlet, leaves the first outlet open and, when there are increasing rates of flow as a result of the supply of greater quantities of water, in particular rainwater, shuts off the first outlet. When the first outlet is closed, water can be discharged by way of the second outlet.

The known gully is used for separating water coming from, for example, streets and car parks, in the case of which coarse waste has already been removed before the water reaches the separating gully. This means that the first outlet, which is intended for the dirty water, can have a relatively small diameter. In the case of normal rainfall, when the rainwater can still contain all kinds of light street refuse, oil and the like, the diameter is sufficiently large to discharge the rainwater to a sewage drain that is connected to the first outlet. When there is heavy rainfall, the flow rate is too great for the small first outlet, so that the latter is closed off. The water level in the gully rises as a result, and all of the rainwater is subsequently discharged by way of the second outlet. The rainwater is then in the meantime relatively clean because most of the dirt has already been discharged in the first instance, and because the concentration of dirt still present is relatively low anyway, on account of the greater flow rate.

A disadvantage of the known gully is that removal of coarse waste is necessary upstream, because otherwise the small first outlet is going to become blocked, or the flow limiter in the first outlet will not work properly. Besides, when the sewage drain downstream of the gully fills up, the water can flow back out of the sewage drain into the gully and by way of the gully can reach the second outlet for clean water.

The object of the invention is to provide a gully of the type mentioned in the preamble that does not have these disadvantages.

This object is achieved according to the invention by the fact that the inlet and the second outlet are connected to each other in the interior of the gully by means of a connecting pipe part that is provided with a lateral branch facing the bottom of the gully, a ball is situated in the interior of the gully, which ball can float on water and has a diameter that is greater than the diameter of the lateral branch, and furthermore means are provided in the interior of the gully in order to prevent the ball from being able to close off the first outlet, as well as guide means for guiding the ball towards the lateral branch when the water level rises in the gully.

In this way it is ensured that by means of a relatively simple gully dirty waste water fed in through the inlet and relatively clean rainwater are discharged through different outlets. When relatively small quantities of water, in particular dirty waste water, are fed in, the water fed in through the inlet will flow through the lateral branch in the connecting pipe part and the interior of the gully to the first outlet, which may be connected to a sewage drain with a limited capacity. The ball leaves the first outlet clear in this case. When large quantities of water are fed in, as is the case when there is heavy rainfall, in which case the water fed in is relatively clean, the sewage drain will fill up, as a result of a limited capacity downstream of the first outlet. As a result of this, the water can no longer be discharged through the first outlet. The water level in the gully will then rise, and the ball floating on the water will be guided towards the lateral branch of the connecting pipe part and will close the latter off. The water fed in through the inlet is then guided directly towards the second outlet, which may be connected to a rainwater discharge system.

Preferred embodiments of the gully according to the invention are described in the subclaims.

The invention will be explained in greater detail below with reference to the drawing, in which:
Fig. 1 shows a specific embodiment of a gully according to the invention in vertical section, and
Fig. 2 shows a cross section of the gully of Fig. 1 along the line II - II.

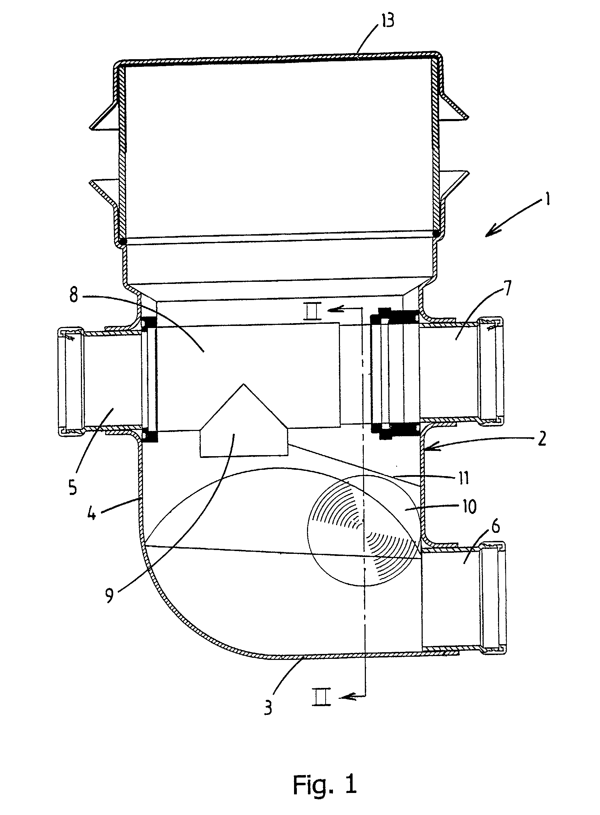

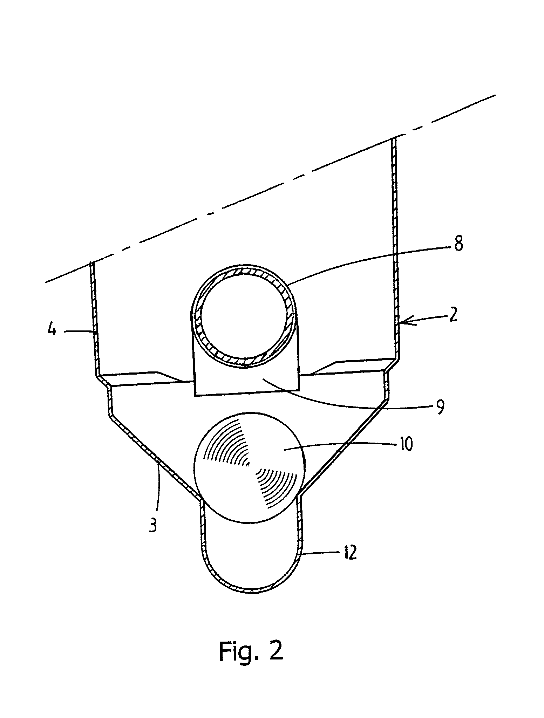

The gully 1 shown in Figs 1 and 2 is designed for receiving and separately discharging dirty waste water and relatively clean rainwater. The gully is intended in particular for use in systems for the discharge of water coming from buildings in the case of which sewage and waste water are not already separated in the buildings.

The gully 1 comprises a gully body 2 with a bottom 3 and a side wall 4. The gully body 2 is provided with an inlet 5 made at a certain height in the side wall 4, a first outlet 6 made in the side wall at a lower level than the inlet 5, preferably near the bottom 3, and a second outlet 7 made in the side wall 4 at substantially the same height as the inlet 5. A water supply line (not shown) may be connected to the inlet 5. A sewage discharge line (not shown), leading to a sewage drain, may be connected to the first outlet 6, and a rainwater discharge line (not shown), leading to a rainwater discharge system, may be connected to the second outlet 7.

The diameter of the first outlet 6 and the diameter of the second outlet 7 are preferably the same as the diameter of the inlet 5.

The inlet 5 and the second outlet 7 are connected to each other in the interior of the gully 1 by means of a connecting pipe part 8, which is provided with a lateral branch 9 facing the bottom 3 of the gully.

A ball 10, which can float on water, is situated in the interior of the gully. The ball 10 has a diameter that is greater than the diameter of the lateral branch 9. Guide means 11 are further provided in the interior of the gully 1, for the purpose of guiding the ball 10 towards the lateral branch 9 when the water level rises in the gully 1.

The bottom 3 of the gully is provided with a substantially U-shaped flow section 12, which connects to the first outlet 6. The width of the open top side of the flow section 12 is less than the diameter of the ball 10. The ball 10 can consequently never close off the first outlet 6.

The gully is usually closed off at the top by a cover 13.

The gully functions as follows.

When relatively small quantities of water, in particular dirty waste water, are fed in, the water fed in through the inlet 5 flows through the lateral branch 9 in the connecting pipe part 8 and the interior of the gully 1 to the first outlet 6, which is connected to a sewage drain. The ball 10 leaves the first outlet 6 clear in this case. The gully will not become blocked by coarse waste that may come out of the inlet 5 with the water, because said coarse waste can be discharged through the clear part of the flow section 12 to the first outlet.

When large quantities of water are fed in, as is the case when there is heavy rainfall, in which case the water fed in is relatively clean, the sewage drain connected to the first outlet 6 will fill up, since this drain has a limited capacity downstream of the first outlet 6. The water level in the gully 1 will consequently rise, and the ball 10 floating on the water will be guided by the guide means 11 towards the lateral branch 9 of the connecting pipe part 8 and will close said lateral branch off. The water fed in through the inlet 5 is then guided directly towards the rainwater discharge system connected to the second outlet 7. The rainwater discharge system may comprise an overflow, a storage device and/or an infiltration facility.

By means of the gully 1 described above, it is ensured that dirty waste water and relatively clean rainwater fed in through the inlet 5 are discharged through different outlets 6, 7.

The gully according to the invention is designed in particular for use in the renovation of existing sewer systems, in the case of which the authorities can adapt the sewer system in the street so that it separates sewage and rainwater and produces a sewage drain with a lower capacity. This means that the capacity of purification plants does not have to be increased further. There is generally no possibility for making it compulsory for each house or other building to have a separate discharge of sewage and rainwater. By means of the gully according to the invention, it is possible to achieve a separation afterwards at those times when it is really important, at relatively low cost.

## Claims

1. Gully for receiving and separately discharging dirty waste water and relatively clean rainwater, comprising a gully body with a bottom and a side wall, which gully body is provided with an inlet made at a certain height in the side wall, a first outlet made in the side wall at a lower level than the inlet, and a second outlet made in the side wall at substantially the same height as the inlet, **characterized in that** the inlet (5) and the second outlet (7) are connected to each other in the interior of the gully by means of a connecting pipe part (8) that is provided with a lateral branch (9) facing the bottom (3) of the gully, a ball (10) is situated in the interior of the gully, which ball can float on water and has a diameter that is greater than the diameter of the lateral branch, and furthermore means are provided in the interior of the gully in order to prevent the ball from being able to close off the first outlet, as well as guide means (11) for guiding the ball towards the lateral branch when the water level rises in the gully.

2. Gully according to claim 1, in which the diameter of the first outlet (6) and the diameter of the second outlet (7) are substantially the same as the diameter of the inlet (5).

3. Gully according to claim 1 or 2, in which the bottom of the gully is provided with a substantially U-shaped flow section (12), which connects to the first outlet (6), the width of the open top side of the flow section being less than the diameter of the ball (10).
